# EUROPEAN PATENT APPLICATION

(11) **EP 4 764 652 A1**
(43) Date of publication of application: **24.06.2026**
(21) Application number: 25224386.0
(22) Date of filing: 17.12.2025
(51) Int. Cl.: G02B 27/00, G02B 27/01

(54) **OPTICAL APPARATUS**

(30) Priority: 23.12.2024 GB 202418930
(71) Applicant: Nokia Technologies Oy, 02610 Espoo (FI)
(72) Inventor: SALMIMAA, Marja Pauliina, Tampere (FI); JÄRVENPÄÄ, Toni Johan, Akaa (FI)
(74) Representative: Nokia EPO representatives

(57) **Abstract**

Examples of the disclosure relate to optical apparatus that can adjust the focus distance of images provided by the apparatus. The apparatus comprises a light guide configured to receive an input beam of light and provide an expanded output beam of light. The apparatus also comprises one or more optical components configured to adjust the expanded output beam of light. The apparatus also comprises adjustment means. The adjustment means are configured to adjust at least one of the light guide or the one or more optical components to enable a focus distance of an image provided by the apparatus to be adjusted. The adjustment means are synchronized with an image source so that the focus distance of the image provided by the apparatus is coordinated with an image provided by the image source.

## Description

### TECHNOLOGICAL FIELD

Examples of the disclosure relate to optical apparatus. Some relate to optical apparatus that can adjust the focus distance of images provided by the apparatus.

### BACKGROUND

Optical apparatus, such as exit pupil expanders, can be used in display systems and devices such as near eye displays, augmented and/or virtual reality headsets and head up displays for example. It is useful to be able to change the focus distance of images provided by the apparatus. This can enable the focus distance of virtual images to be coordinated with the positions of real objects or could enable volumetric images to be provided.

### BRIEF SUMMARY

According to various, but not necessarily all, examples of the disclosure there is provided an apparatus comprising:
a light guide configured to receive an input beam of light and provide an expanded output beam of light;
one or more optical components configured to adjust the expanded output beam of light; and
adjustment means configured to adjust at least one of the light guide or the one or more optical components to enable a focus distance of an image provided by the apparatus to be adjusted wherein the adjustment means are synchronized with an image source so that the focus distance of the image provided by the apparatus is coordinated with an image provided by the image source.

The adjustment means may be arranged to be adjusted successively in coordination with successive images provided by the image source so as to provide volumetric images.

The adjustment means may be arranged to adjust an optical power of at least one of:
the light guide; or
the one or more optical components.

The adjustment means may be arranged to adjust a radius of curvature of at least one of:
the light guide; or
the one or more optical components.

The apparatus may be configured to provide a head-up display on a windshield and optical powers of the one or more items are arranged to compensate for curvature of the windshield and provide a focused image reflected from the windshield.

The apparatus may comprise first adjustment means configured to adjust an optical power of a first item in a first direction and second adjustment means configured to adjust an optical power of a second item in a second direction.

The adjustment means may comprise means for switching one or more optical components between an off state and an on state.

The one or more optical components may comprise at least one of:
a mirror;
a digital micromirror device; or
tuneable optics.

The light guide may comprise in-coupling diffractive means configured to in-couple one or more input beams of light into the light guide, expanding diffractive means configured to expand the one or more input beams of light, and out-coupling diffractive means configured to out-couple the one or more input beams of light from the light guide to provide the expanded output beams of light.

According to various, but not necessarily all, examples of the disclosure there is provided a device comprising an apparatus as described herein wherein the device comprises at least one of:
a terrestrial vehicle;
an aquatic vehicle; or
an aerial vehicle.

According to various, but not necessarily all, embodiments there is provided an apparatus comprising:
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function.

### BRIEF DESCRIPTION

Some examples will now be described with reference to the accompanying drawings in which:
FIGS. 1A and 1B show volumetric images;
FIG. 2 shows an example apparatus;
FIGS. 3A and 3B show an example apparatus;
FIGS. 4A to 4D show example volumetric images;
FIGS. 5A and 5B show an example apparatus;
FIG. 6 shows an example driving scheme for an apparatus;
FIG. 7 shows an example driving scheme for an apparatus;
FIGS. 8A and 8B show an example apparatus;
FIG. 9 shows example adjustment means; and
FIGS. 10A and 10B show a digital micromirror device.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

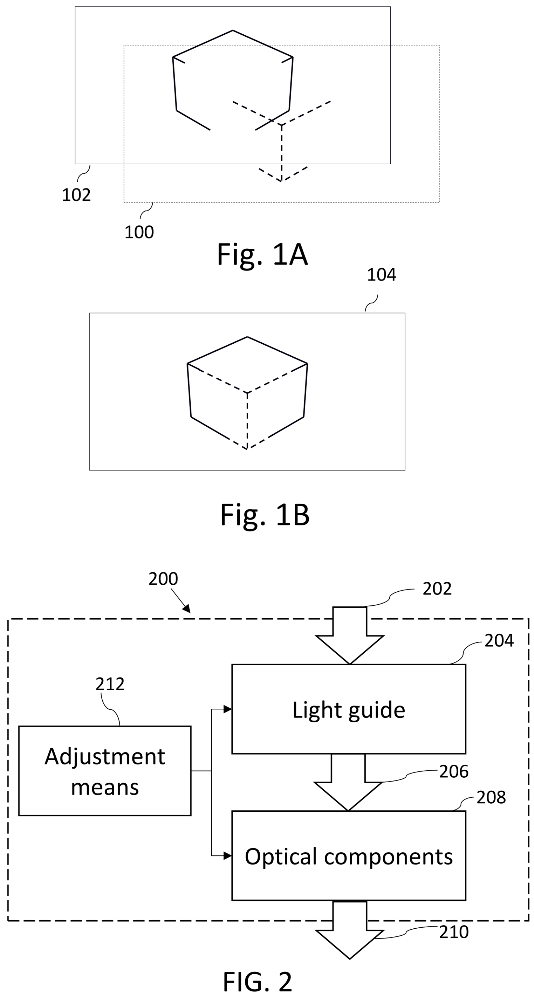

Figs. 1A and 1B show how volumetric images can be provided. Fig. 1A shows a first image portion 100 and a second image portion 102. The first image portion 100 is provided with a first focus distance and the second image portion 102 is provided with a second focus distance. In this case the first focus distance is smaller than the second fous distance.

In this case the first image portion 100 comprises front edges of a cube and the second image portion 102 comprises rear edges of a cube. The images could comprise any other suitable images in examples of the disclosure.

When the first image portion 100 and second image portion 102 are displayed successively or simultaneously they can be perceived to be overlaying each other as shown in Fig. 1B. The respective image portions 100, 102 combine to form a combined image 104. The combined image 104 appears to be a volumetric or three-dimensional image.

In the example of Fig. 1B the combined image 104 comprises a cube. Other images could be used in other examples.

Examples of the disclosure provide apparatus that can be used to provide volumetric images such as those shown in Figs. 1A and 1B. In some examples the apparatus could be used to provide images at a selected focus distance. This could be used to coordinate the display of virtual images with real world objects, or for any other suitable purpose.

Fig. 2 shows an example apparatus 200 according to examples of the disclosure. The apparatus 200 could be used in head up displays (HUDs), consoles, virtual reality displays, augmented reality displays, or any other suitable type of devices. Devices that can comprise the apparatus 200 could be terrestrial vehicles, aquatic vehicles, aerial vehicles or any other suitable devices.

The apparatus 200 comprises a light guide 204, one or more optical components 208 and adjustment means 212. Only the items of the apparatus 200 that are referred to in the following description are shown in Fig. 2. However, the apparatus 200 could comprise other items that are not shown in Fig. 2.

The light guide 204 is configured to receive an input beam of light 202 and provide an expanded output beam of light 206. The light guide 204 can comprise in-coupling diffractive means configured to in-couple one or more input beams of light 202 into the light guide 204, expanding diffractive means configured to expand the one or more input beams of light 202, and out-coupling diffractive means configured to out-couple the one or more beams of light from the light guide 204 to provide an expanded output beam of light 206. In some examples the expanding diffractive means can expand the one or more input beam of light 202 in a first dimension and the out-coupling diffractive means can expand the expanded beam of light in a second dimension to provide the expanded output beam of light 206.

The one or more optical components 208 are configured to adjust the expanded output beam of light 206 and provide an adjusted beam of light 210.The optical components 208 can comprise mirrors, digital micromirror devices (DMDs), tuneable optics, and/or any other suitable components.

In some examples the apparatus 200 can be used in a HUD in a vehicle or in any other suitable device. In such use cases the adjusted beam of light 210 from the one or more optical components 208 can be reflected from a windshield or otherwise directed towards a user.

If the windshield is curved the optical powers of one or more of the items in the apparatus 200 can be arranged to compensate for the optical power of the windshield. The optical powers of the items can enable a focused image to be reflected from the windshield and directed towards a user.

In some examples multiple items in the apparatus 200 can compensate for curvature of the windshield in different dimensions. For instance, a first item could have an optical power in a first dimension to compensate for curvature of the windshield in the first dimension and a second item could have an optical power in a second dimension to compensate for curvature of the windshield in the second dimension. The items that compensate for the curvature of the windshield could comprise the light guide 204 and/or one or more of the optical components 208.

The adjustment means 212 are configured to adjust at least one of the light guide 204 and the one or more optical components 208. The adjustment means 212 can be arranged to adjust an optical power of the light guide 204, and/or the one or more optical components 208, and/or any other suitable items in the apparatus 200. The optical powers can be adjusted in any suitable manner.

In some examples the optical powers can be adjusted by adjusting a radius of curvature of the respective items. The curvatures can be adjusted by moving or bending at least part of the respective items.

In some examples the adjustment means 212 can comprise means for switching one or more optical components between an off state and an on state. This can enable different optical components 208 with different optical powers to be used at different times.

The adjustment of the light guide 204 or the one or more optical components 208 enables a focus distance of an image provided by the apparatus 200 to be adjusted. The adjustment means 212 can arrange the light guide 204 and the one or more optical components 208 in a first configuration in which the image provided by the apparatus 200 has a first focus distance. The adjustment means 212 can also arrange the light guide 204 and the one or more optical components 208 in a second configuration in which the image provided by the apparatus 200 has a second focus distance. This can enable the same apparatus 200 to provide images at different focus distances. The adjustment means 212 could have any number of configurations to enable the images to be provided in a range of different focus distances.

The adjustment means 212 are synchronized with an image source so that the focus distance of the image provided by the apparatus 200 is coordinated with images provided by the image source. The image source can comprise any means that can be configured to provide virtual images. The apparatus 200 is positioned relative to the image source so that the virtual images from the image source provide an input for the apparatus 200. In some examples multiple image sources could provide images with different focus distances.

The adjustment means 212 can be arranged to be adjusted successively in coordination with successive images provided by the image source so as to provide volumetric images. For instance, a first portion of an image could be provided by the image source at a first time when the items of the apparatus 200 are in a first configuration. A second portion of the image could be provided by the image source at a second time. In between the first portion of the image being displayed and the second portion of the image being displayed the adjustment means adjusts the items of the apparatus so that, at the second time, the items of the apparatus 200 are in the second configuration. The respective portions of the image can be displayed in quick succession so that they are perceived as part of the same combined volumetric image.

In the example of Fig. 2 a single adjustment means 212 is shown. In some examples the apparatus 200 could comprise multiple adjustment means 212. For instance, a first adjustment means can be configured to adjust an optical power of a first item in a first direction and a second adjustment means can be configured to adjust an optical power of a second item in a second direction.

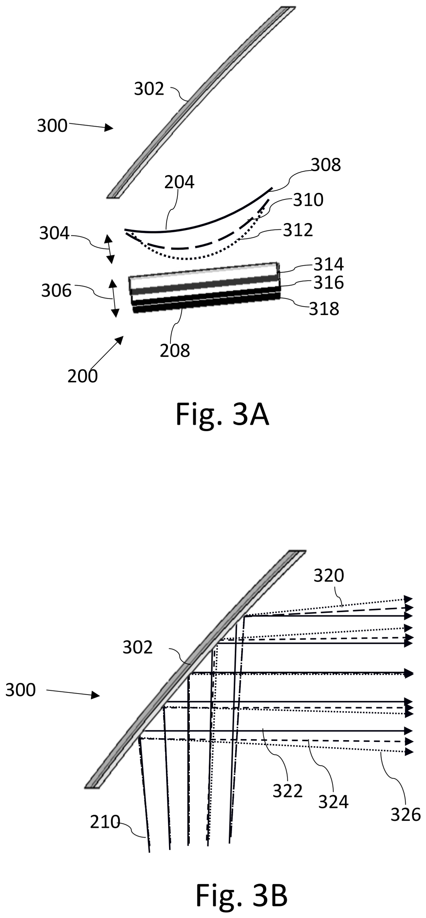

Figs. 3A and 3B show an example apparatus 200 that can be used in some examples of the disclosure. In this case the apparatus 200 is provided in a HUD 300. Fig. 3A shows the example apparatus 200 and Fig. 3B shows the adjusted beam of light 210 output from the apparatus 200 and reflected from the windshield 302.

The HUD 300 could be provided in a vehicle. As mentioned above, the vehicle could be a terrestrial vehicle, an aerial vehicle, an aquatic vehicle or any other suitable type of vehicle.

The HUD comprises at least one image source and an apparatus 200. The image source is not shown in Figs. 3A and 3B. In this example the apparatus 200 comprises a light guide 204 and optical components 208 as shown in Fig. 2. The apparatus 200 also comprises adjustment means 212 that are not shown in Figs. 3A and 3B. The adjustment means 212 can be arranged to adjust the light guide 204 and also the optical components 208.

The image generating unit is arranged to provide an input beam of light to the light guide 204. The light guide 204 is configured to expand the input beam of light and provides an expanded beam of light 206 as an output.

In the example of Figs. 3A and 3B the light guide 204 is curved. The light guide 204 can have cylindrical curvature so that the light guide 204 is curved in one dimension. The curvature does not need to be cylindrical in other examples.

The expanded beam of light 206 from the light guide 204 is directed towards the one or more optical components 208. The one or more optical components adjust the expanded beam of light 206 and provide an adjusted beam of light 210.

In the example of Figs. 3A and 3B the optical components 208 comprise a curved mirror. The mirror has cylindrical curvature so that the mirror is curved in one dimension. The curvature does not need to be cylindrical in other examples. The axis around which the mirror is curved can be perpendicular, or substantially perpendicular, to the axis around which the light guide 204 is curved. Having the light guide 204 and the mirror being curved around different axes can provide optical powers in different dimensions.

The adjusted beam of light 210 is directed towards the windshield 302 and reflected from the windshield 302. Fig. 3B shows the reflected beams of light 320 which can be directed towards a user of the HUD 300.

The adjustment means 212 can be configured to adjust the light guide 204 and the mirror. In some examples the same adjustment means 212 can be used to adjust both the light guide 204 and the mirror. In other examples the apparatus 200 can comprise multiple adjustment means 212. A first adjustment means 212 can be used to adjust the light guide 204 and a second adjustment means 212 can be used to adjust the mirror or any other optical components 208.

Fig. 3A shows three different arrangements of the apparatus 200. The arrow 304 indicates how the light guide 204 can be moved between different configurations. The arrow 306 indicates how the mirror can be moved between different configurations. In the first arrangement the light guide 204 is arranged in a first configuration 308. In the first configuration 308 the light guide 204 has a first radius of curvature. Similarly, in the first arrangement the mirror is synchronized with the light guide 204 and also arranged in a first configuration 314. In the first configuration 314 the mirror has a first radius of curvature.

The first arrangement of the apparatus 200 can provide the collimated reflected beams 322 shown in Fig. 3B. This can provide images with a first focus distance. In this example the first focus distance is infinity. Other focus distances could be used in other examples.

In the second arrangement the light guide 204 is arranged in a second configuration 310. In the second configuration 310 the light guide 204 is bent by the adjustment means 212 so that the light guide 204 has a second radius of curvature. Similarly, in the second arrangement the mirror is also bent by the adjustment means 212. The bending of the mirror is synchronized with the bending of the light guide 204 so that the mirror is also arranged in a second configuration 316. In the second configuration 316 the mirror has a second radius of curvature.

The second arrangement of the apparatus 200 can provide the converging reflected beams 324 indicated by the dashed lines in Fig. 3B. This can provide images with a second focus distance. In this example the second focus distance can be a middle distance. Other focus distances could be used in other examples.

In the third arrangement the light guide 204 is arranged in a third configuration 312. In the third configuration 312 the light guide 204 is bent by the adjustment means 212 so that the light guide 204 has a third radius of curvature. Similarly, in the third arrangement the mirror is also bent by the adjustment means 212. The bending of the mirror is synchronized with the light guide 204 so that the mirror is also arranged in a third configuration 318. In the third configuration 318 the mirror has a third radius of curvature.

The third arrangement of the apparatus 200 can provide the converging reflected beams 326 indicated by the dotted lines shown in Fig. 3B. This can provide images with a third focus distance. In this example the third focus distance can be a near distance. Other focus distances could be used in other examples.

The bending of the light guide 204 and the mirror can be synchronized with the image source or with the image sources so that the content provided by the image sources correspond to the current focus distance of the apparatus 200.

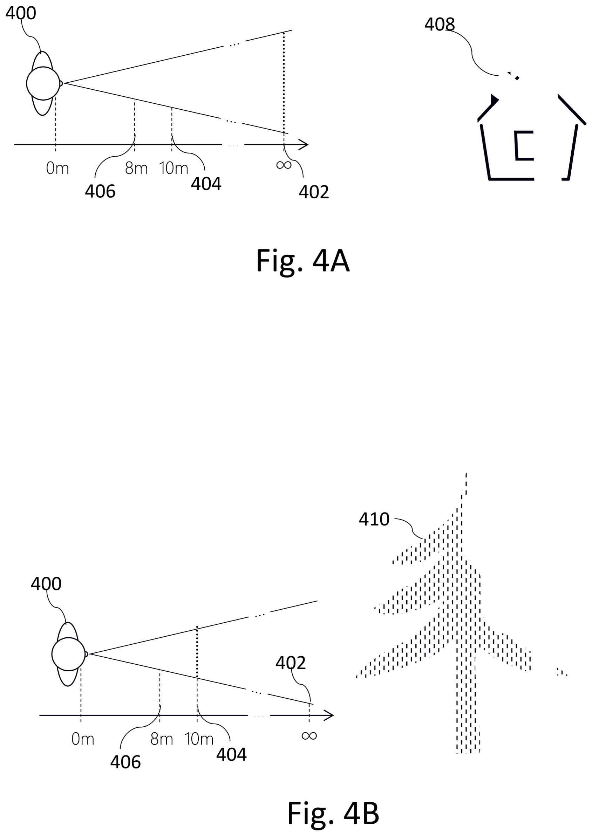

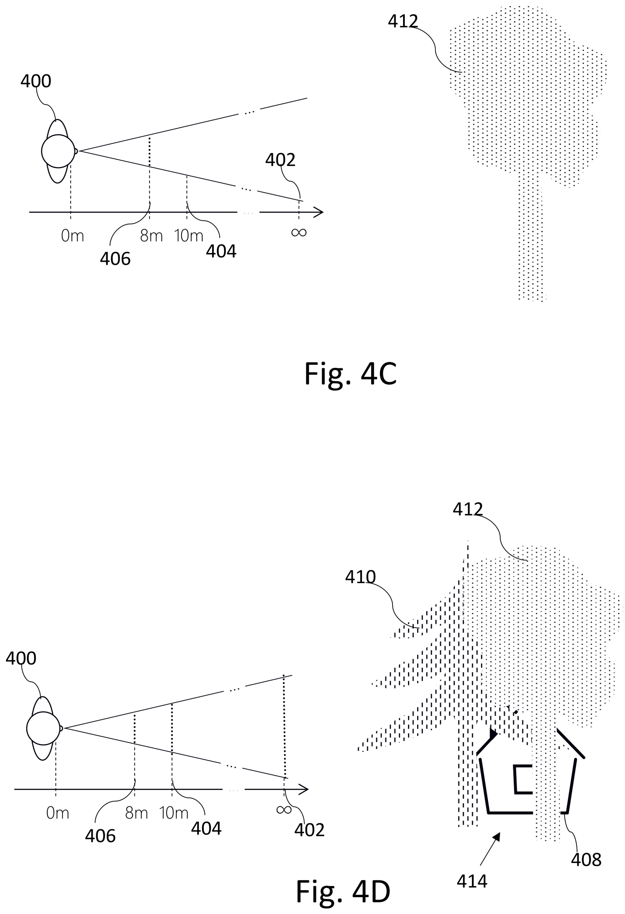

Figs. 4A to 4D show focus distances of example images that can be provided by apparatus 200 such as the apparatus 200 used in Fig. 3. The apparatus 200 can be used by a user 400. The user 400 could be a driver of a vehicle comprising a HUD 300. The apparatus 200 could be used in other types of devices in other examples.

Fig. 4A shows a first image 408 that can be displayed when the apparatus 200 is in the first arrangement. In the example of Fig. 4A the first image 408 comprises a house. Other images or content could be used in other examples.

This first image 408 has a first focus distance 402. In this example the first focus distance 402 is at infinity.

Fig. 4B shows a second image 410 that can be displayed when the apparatus 200 is in the second arrangement. In the example of Fig. 4B the second image 410 comprises a fir tree. Other images or content could be used in other examples.

This second image 410 has a second focus distance 404. In this example the second focus distance 404 is in the middle distance. This could be a distance of around 10 m or any other suitable distance.

Fig. 4C shows a third image 412 that can be displayed when the apparatus 200 is in the third arrangement. In the example of Fig. 4C the third image 412 comprises a tree. Other images or content could be used in other examples.

This third image 412 has a third focus distance 406. In this example the third focus distance 406 is in the near distance. This could be a distance of around 8 m or closer to the user 400 or any other suitable distance.

The image source can be arranged to display the images 408, 410, 412 in quick succession so that they appear as a combined image 414. The combined image 414 comprises each of the images 408, 410, 412. The first image 412 appears to be in front of the second image 410 and the first image 408 and the second image 410 appears to be in front of the first image 408. The combined image 414 provides a three dimensional image.

Other images could be used in other examples. For instance, the images could be virtual images that are arranged to be displayed at a distance that aligns with real word objects. This could be used to provide warning alerts in a vehicle or for any other purpose. In such example the distance of the user to an object could be displayed and then the adjustment means 212 can adjust the light guide 204 and the optical components 208 so that the focus distance of images from the apparatus 200 is aligned with the distance of the real world objects.

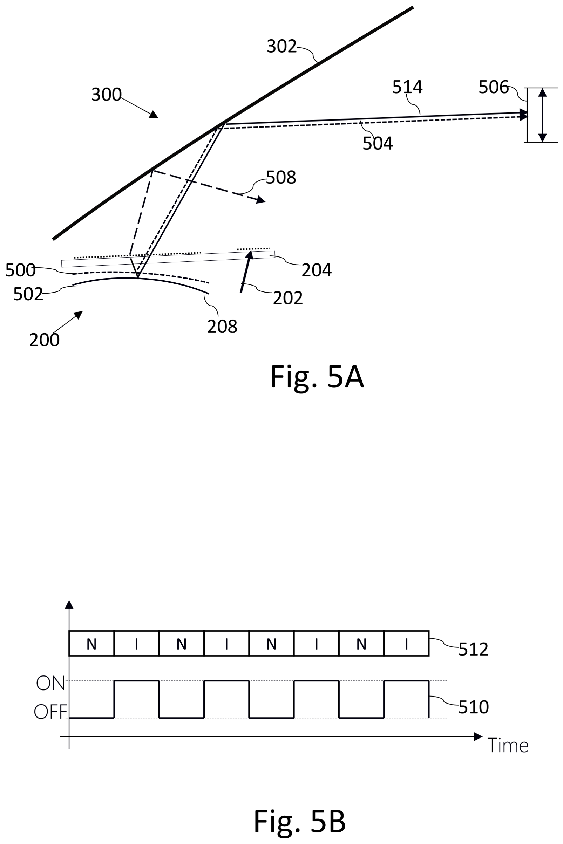

Figs. 5A and 5B show another apparatus 200 according to examples of the disclosure. Fig. 5A schematically shows an example apparatus 200 and Fig. 5B shows an example driving scheme for adjustment means 212 of the apparatus 200.

In this case the apparatus 200 is also provided within a HUD 300. The HUD 300 could be provided within any suitable type of vehicle or any other suitable device.

In this case the apparatus 200 comprises a light guide 204 and optical components 208. The light guide 204 is configured to receive an input beam of light 202 from a light source and provide an expanded output beam of light. In this case the light guide 204 is flat or substantially flat.

The expanded output beam of light is directed towards the optical components 208. In this case the optical components 208 comprise a first mirror 500 and a second mirror 502.

The first mirror 500 and the second mirror 502 are arranged in a stacked configuration so that the first mirror 500 overlays the second mirror 502. The first mirror 500 is a switchable mirror. The switchable mirror can be electrically switchable. The first mirror 500 can be switched between an on state and an off state. When the first mirror 500 is in an on state the first mirror 500 reflects the expanded beam of light from the light guide 204. When the first mirror 500 is in the on state the expanded beam of light does not pass through to the second mirror 502. When the first mirror 500 is in an off state the first mirror 500 does not reflect the expanded beam of light from the light guide 204 instead the expanded beam of light passes through to the second mirror 502. When the first mirror 500 is in the off state the expanded beam of light is reflected from the second mirror 502.

The first mirror 500 and the second mirror 502 can have different optical powers. The different optical powers can be provided by different curvatures of the respective mirrors 500, 502 or by any other suitable means. In this example the light guide 204 is flat and the mirrors 500, 502 can be curved in two dimensions. The different optical powers of the mirrors 500, 502 can provide images at different focus distances. Therefore, when the first mirror 500 is on the images are provided at a first focus distance and when the first mirror 500 is off the images are provided at a second focus distance.

In the example of Fig. 5A when the first mirror 500 is in an on state the apparatus 200 can provide collimated beams 504 reflected from the windshield 302. This provides the exit pupil 506. The images provided when the first mirror 500 is in the on state have a focus distance of infinity. If the first mirror 500 is in an off state the apparatus 200 provides the converging beams 514 reflected from the windshield 302. This can provide images at a near focus distance. This can also provide the exit pupil 506, or an exit pupil closely matching with the exit pupil 506. Other arrangements of the apparatus 200 could enable the respective images to be provided at different focus distances.

In the example of Fig. 5A beams 508 out-coupling upwards from the light guide 204 could cause out of focus ghost images after reflecting from the windshield 302 towards the exit pupil 506. In this example however the light guide 204, the first mirror 500 and the second mirror 502 are oriented so that the beams 504 and 514 being reflected from the windshield 302 provide the exit pupil 506 and the beams 508 are steered away from the exit pupil 506. The ghost images caused by the beams 508 are therefore not visible to a user of the HUD 300.

In the example of Figs. 5A and 5B the adjustment means 212 (not shown in Figs. 5A and 5B) are arranged to adjust the optical components 208 by switching the first mirror 500 between an off state and an on state.

Fig. 5B shows an example driving scheme for the first mirror 500. The trace 510 shows the times when the first mirror 500 is in an off state and an on state. The adjustment means 212 synchronizes the state of the first mirror 500 with the images displayed by the image source. As shown by the plot 512 when the first mirror 500 is in an off state the images provided by the image source are provided with a near (N) focus distance and the when the first mirror 500 is in an on state the images provided by the image source are provided with an infinite (I) focus distance. The driving scheme could be used to enable volumetric images to be provided.

In the example of Figs. 5A and 5B the optical component 208 of the apparatus 200 comprise a first mirror 500 and a second mirror 502. In other examples the optical components 208 of the apparatus 200 could comprise more than two mirrors. For instance the optical components 208 could comprise three mirrors arranged in a stacked configuration. In the stacked configuration the first mirror can overlay a second and third mirror and the second mirror can overlay the third mirror. In such cases both the first mirror and the second mirror can be switched between an on state and an off state. The different mirrors can have different optical powers so as to enable images to be provided with different focus distances. The different optical powers could be provided by different curvatures of the mirrors or by any other suitable means.

Having three mirrors can provide three different arrangements for the apparatus 200. This can enable images to be provided with three different focus distances. In a first arrangement the first mirror is in an on state. In the first arrangement the first mirror reflects the expanded beam of light from the light guide 204. When the first mirror is in the on state the expanded beam of light does not pass through to the second mirror. This can provide images with a first focus distance.

In a second arrangement the first mirror is in an off state and the second mirror is in an on state. When the first mirror is in an off state the first mirror does not reflect the expanded beam of light from the light guide 204 instead the expanded beam of light passes through to the second mirror. In the second arrangement the expanded beam of light is reflected from the second mirror. This can provide images with a second focus distance.

In a third arrangement the first mirror is in an off state and the second mirror is also in an off state. When both the first mirror and the second mirror are in an off state neither the first mirror nor the second mirror reflect the expanded beam of light from the light guide 204. Instead the expanded beam of light passes through to the third mirror. In the third arrangement the expanded beam of light is reflected from the third mirror. This can provide images with a third focus distance.

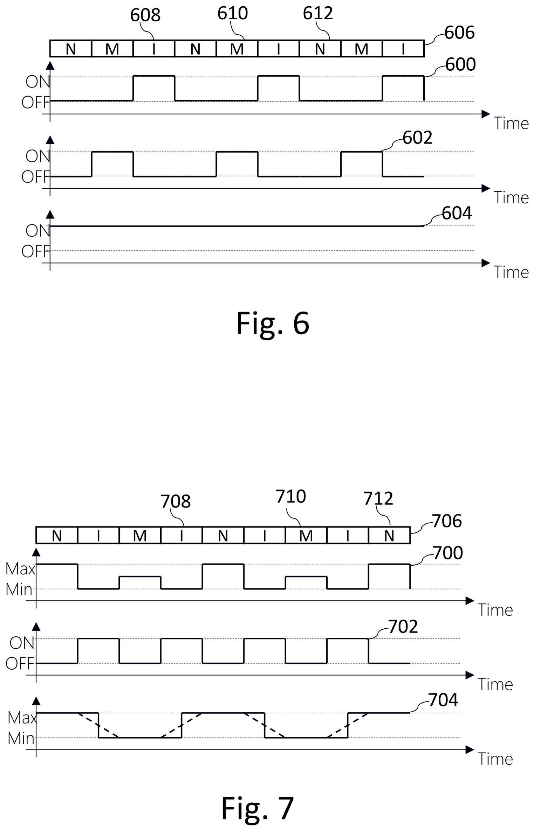

Fig. 6 shows an example driving scheme for an apparatus 200 where the optical components comprise a stack of three mirrors.

The trace 600 shows the times when the first mirror is in an off state and an on state. The trace 602 shows the times when the second mirror is in an off state and an on state. The trace 604 shows that the third mirror is always in an on state and the third mirror does not need to be a switchable mirror.

The plot 606 shows whether the images displayed by the image source are provided with a near (N) focus distance, a middle (M) focus distance or an infinite (I) focus distance.

At a first time 608 the apparatus 200 is in a first arrangement with the first mirror is in an on state. At the first time 608 the image source provides images for an infinite focus distance. In this case when the first mirror is in an on state the second mirror is in an off state. Whether the second mirror is in an on state or an off state when the apparatus 200 is in the first arrangement can depend on factors such as how quickly the successive images are displayed and how quickly the second mirror can switch between the on state and the off state.

At a second time 610 the apparatus 200 is in a second arrangement with the first mirror is in an off state and the second mirror in an on state. At the second time 610 the image source provides images for a middle focus distance.

At a third time 612 the apparatus 200 is in a third arrangement with both the first mirror and the second mirror in an off state. At the third time 612 the image source provides images for a near focus distance.

Fig. 7 shows another example driving scheme for a different apparatus 200. In this example the apparatus 200 can comprise a light guide 204 and optical components 208 comprising a stack of two mirrors. In such examples the optical power of the light guide 204 is adjustable. For instance, the light guide 204 could be bendable so that it can be adjusted between a minimal level of curvature and a maximum level of curvature. The first mirror 500 in the stack can be switchable between an on state and an off state. The second mirror 502 in the stack can be adjustable so as to provide different optical powers. For example, the second mirror 502 could be adjusted between a minimum level of curvature and a maximum level of curvature.

Such an apparatus 200 can also provide at least three different arrangements for the apparatus 200 to enable images to be provided with three different focus distances. In a first arrangement the light guide 204 is arranged with a minimal level of curvature and the first mirror 500 is in an on state. This can provide images with a first focus distance.

In a second arrangement the light guide 204 is arranged with an intermediate level of curvature and the first mirror 500 is in an off state and the second mirror 502 is arranged within a minimum level of curvature. This can provide images with a second focus distance.

In a third arrangement the light guide 204 is arranged with a maximum level of curvature and the first mirror 500 is in an off state and the second mirror 502 arranged with a maximum level of curvature. This can provide images with a third focus distance.

In the example of Fig. 7 the trace 700 shows the relative curvature of the light guide 204 at respective times. The trace 702 shows the times when the first mirror 500 is in an off state and an on state. The trace 704 shows the relative curvature of the second mirror 502 at respective times. Whether the curvature of the second mirror 502 is minimized or maximized or somewhere between when the apparatus 200 is in the first arrangement can depend on factors such as how quickly the successive images are displayed and how quickly the second mirror 502 can switch between the on state and the off state.

The plot 706 shows whether the images displayed by the image source are provided with a near (N) focus distance, a middle (M) focus distance or an infinite (I) focus distance.

At a first time 708 the apparatus 200 is in a first arrangement. At the first time 708 the image source provides images for an infinite focus distance. At a second time 710 the apparatus 200 is in a second arrangement. At the second time 710 the image source provides images for a middle focus distance. At a third time 712 the apparatus 200 is in a third arrangement. At the third time 712 the image source provides images for a near focus distance.

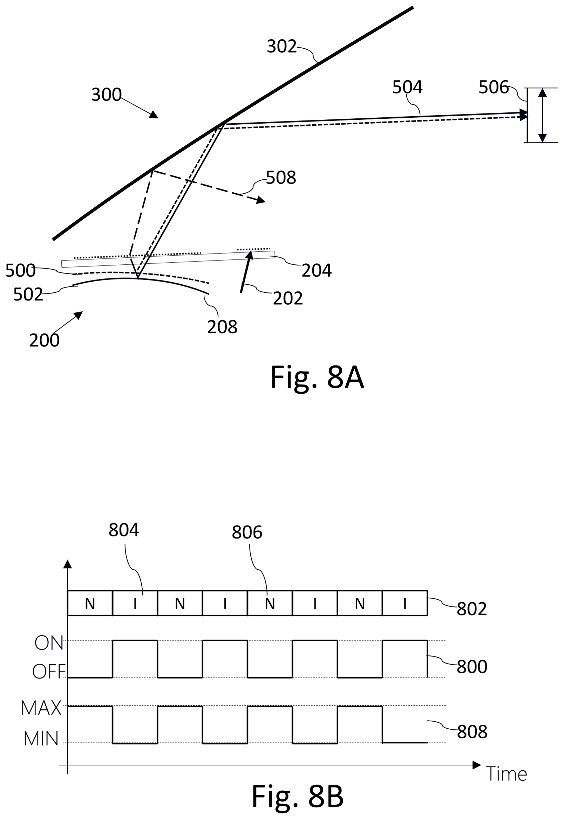

Figs. 8A and 8B show another example apparatus 200 according to examples of the disclosure. Fig. 8A schematically shows the example apparatus 200 and Fig. 8B shows an example driving scheme for adjustment means 212 of the apparatus 200.

The example apparatus 200 of Figs. 8A and 8B is similar to the apparatus shown in Figs. 5A and 5B in that the apparatus 200 comprises a light guide 204 and optical components 208 and that the optical components 208 comprise a first mirror 500 and a second mirror 502 arranged overlaying each other.

However, in the example of Figs. 8A and 8B the light guide can be bendable. The light guide 204 could be curved in a first dimension and the mirrors 500, 502 can be curved in a second dimension. This light guide 204 could be bendable so that it can be adjusted between a minimal level of curvature and a maximum level of curvature.

The apparatus of Figs. 8A and 8B can be arranged into two different arrangements that provide two different focus distances. In a first arrangement the first mirror 500 is in an on state and the light guide 204 is arranged with a minimal level of curvature. This can provide images with a first focus distance. In a second arrangement the first mirror 500 is in an off state and the light guide 204 is arranged with a maximum level of curvature. This can provide images with a second focus distance.

Fig. 8B shows an example driving scheme for the first mirror 500 and light guide 204. The trace 800 shows the times when the first mirror 500 is in an off state and an on state. The trace 808 shows the time when the light guide 204 is arranged with the minimum level of curvature and the maximum level of curvature. The plot 802 shows whether the images displayed by the image source are provided with a near (N) focus distance 806 or an infinite (I) focus distance 804.

At a first time 804 the apparatus 200 is in a first arrangement with the first mirror is in an on state and the light guide 204 has a minimal level of curvature. At the first time 804 the image source provides images for an infinite focus distance.

At a second time 806 the apparatus 200 is in a second arrangement with the first mirror is in an off state and light guide 204 has a maximum level of curvature. At the second time 806 the image source provides images for a near focus distance.

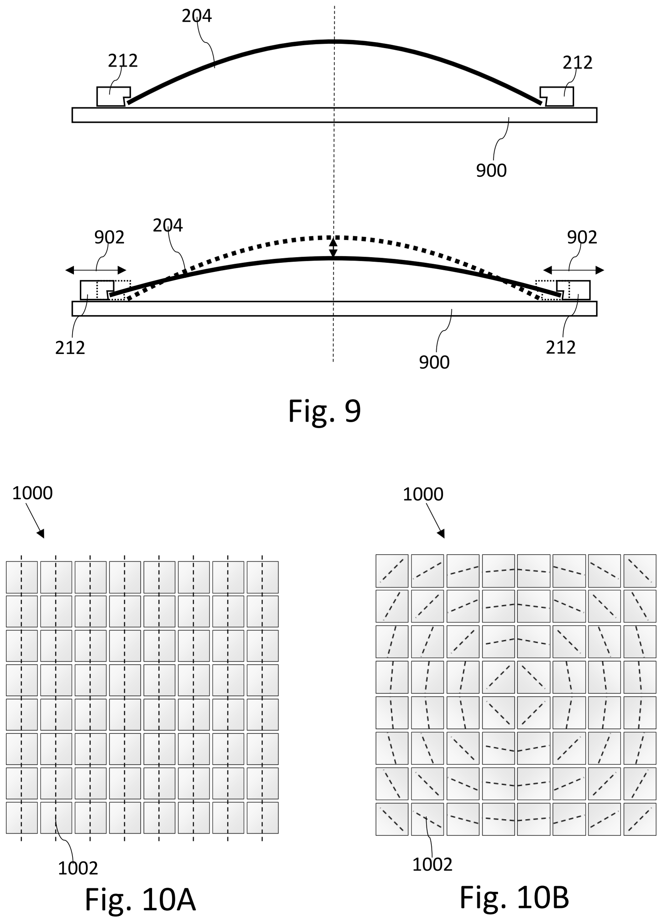

Fig. 9 shows an example adjustment means 212 that can be used in examples of the disclosure. In the examples of Figs. 9A and 9B the adjustment means 212 are being used to adjust a light guide 204. In other examples the adjustment means could be used to adjust an optical component 208 such as a mirror.

In this example the adjustment means 212 can be used to adjust the curvature of the light guide 204.

The light guide 204 is attached to a frame 900 and an adjustment means 212 is coupled to the ends of light guide 204. The adjustment means 212 can comprise an electroactive polymer, a step motor, electromechanical motors or any other suitable means that can be used to move the ends of the light guide 204 as indicated by the arrows 902. The movement of the adjustment means 212 adjusts the light guide 204 between a first curvature as shown in the upper Fig. and a second curvature as shown in the lower Fig.

Fig. 9 shows an example adjustment means 212 for making a mechanical adjustment. Other types of adjustments, such as electrical adjustments, could be made in other examples. For instance, the light guide 204 or other optical components 208 that is to be adjusted could comprise an electrically tunable lens and the optical power of item could be electrically adjusted.

In some examples the bending or other adjustments of the light guide 204 or the other optical components 208 can be matched to the images provided by the image source. For instance, the images provided are intended for a given focus distance and the adjustment means control the apparatus so that the appropriate focus distance is provided.

In other examples the arrangement of apparatus 200 can be used to control the images provided by the image sources. For instance, strain gauge or other suitable mean can be used to measure the current adjustment of the light guide 204 and/or optical components and this information about the current adjustment can be used to control the images provided by an image source.

Figs. 10A and 10B show a digital micromirror device (DMD) 1000 that can be used as an optical component 208 in some examples of the disclosure. The DMD 1000 comprises an array of individual micromirrors. The respective individual micro mirrors can be tilted so as to adjust the DMD 1000. This can change the optical power of the DMD 1000. The benefit over a curved mirror is that the DMD 1000 can be flat.

The example DMD 1000 in Fig.10A could be used with the example apparatus 200 similar to that shown in Figs. 8A and 8B where the light guide 204 is configured to be bent in a first dimension. In this case the DMD only needs to have an adjustable optical power in one dimension. The adjusting of the optical power in this single dimension can be achieved by tilting the individual micromirrors about the axis 1002. In this case the tilt axes or hinges of all micromirrors are parallel, so that the optical power of the DMD is only adjusted in one dimension. The axes 1002 could be controllable either separately for each individual micromirror or separately for each micromirror column.

The example DMD 1000 in Fig.10B could be used with the example apparatus 200 similar to that shown in Figs. 5A and 5B where the light guide 204 is flat or substantially flat and the optical components 208 can be adjusted in two dimensions. In this example the different micromirrors in the DMD 1000 are each tiltable about an axis 1002. In this case the axis 1002 are not parallel so as to provide an adjustable optical power in two dimensions.

Other arrangements for the optical components could be used in other examples.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
a light guide configured to receive an input beam of light and provide an expanded output beam of light;
one or more optical components configured to adjust the expanded output beam of light; and
adjustment means configured to adjust at least one of the light guide or the one or more optical components to enable a focus distance of an image provided by the apparatus to be adjusted wherein the adjustment means are synchronized with an image source so that the focus distance of the image provided by the apparatus is coordinated with an image provided by the image source.

2. The apparatus as claimed in claim 1 wherein the adjustment means are arranged to be adjusted successively in coordination with successive images provided by the image source so as to provide volumetric images.

3. The apparatus as claimed in any preceding claim wherein the adjustment means are arranged to adjust an optical power of at least one of:
the light guide; or
the one or more optical components.

4. The apparatus as claimed in any preceding claim wherein the adjustment means are arranged to adjust a radius of curvature of at least one of:
the light guide; or
the one or more optical components.

5. The apparatus as claimed in any preceding claim wherein the apparatus is configured to provide a head-up display on a windshield and optical powers of the one or more items are arranged to compensate for curvature of the windshield and provide a focused image reflected from the windshield.

6. The apparatus as claimed in any preceding claim wherein the apparatus comprises first adjustment means configured to adjust an optical power of a first item in a first direction and second adjustment means configured to adjust an optical power of a second item in a second direction.

7. The apparatus as claimed in any preceding claim wherein the adjustment means comprises means for switching one or more optical components between an off state and an on state.

8. The apparatus as claimed in any preceding claim wherein the one or more optical components comprises at least one of:
a mirror;
a digital micromirror device; or
tuneable optics.

9. The apparatus as claimed in any preceding claim wherein the light guide comprises in-coupling diffractive means configured to in-couple one or more input beams of light into the light guide, expanding diffractive means configured to expand the one or more input beams of light, and out-coupling diffractive means configured to out-couple the one or more input beams of light from the light guide to provide the expanded output beams of light.

10. A device comprising an apparatus as claimed in any preceding claim wherein the device comprises at least one of:
a terrestrial vehicle;
an aquatic vehicle; or
an aerial vehicle.

11. A method performed by the apparatus of claim 1, comprising:
receiving at a light guide an input beam of light and providing an expanded output beam of light;
adjusting at one or more optical components the expanded output beam of light; and
adjusting at least one of the light guide or the one or more optical components to enable a focus distance of an image provided by the apparatus to be adjusted wherein the adjustment means are synchronized with an image source so that the focus distance of the image provided by the apparatus is coordinated with an image provided by the image source.
